# EUROPÄISCHE PATENTSCHRIFT

(11) **EP 0 760 304 B1**
(45) Veröffentlichungstag und Bekanntmachung des Hinweises auf die Patenterteilung: **12.04.2000**
(21) Anmeldenummer: 96111999.7
(22) Anmeldetag: 25.07.1996
(51) Int. Cl.: B60J 7/12

(54) **Verdeck für ein Fahrzeug, insbesondere Personenkraftwagen**
Soft-top for a vehicle, especially for a motor vehicle
Capote pour véhicule, en particulier pour véhicule automobile

(30) Priorität: 04.09.1995 DE 19532567
(43) Veröffentlichungstag der Anmeldung: 05.03.1997
(73) Patentinhaber: Dr.Ing.h.c. F. Porsche Aktiengesellschaft, 70435 Stuttgart (DE)
(72) Erfinder: Kolb, Eugen, 70469 Stuttgart (DE)

(56) Entgegenhaltungen:
- FR-A- 775 822
- US-A- 2 895 764

## Beschreibung

Die Erfindung bezieht sich auf ein Verdeck für ein Fahrzeug, insbesondere Personenkraftwagen, gemäß dem Oberbegriff des Patentanspruchs 1.

Aus dem Artikel "Der neue Mercedes-Benz Roadster - Karosserie: Klimatisierung, Verdeck und Schließung" von G. Huber. W. Volz, H. Möller und K. Claar in ATZ Automobiltechnische Zeitschrift 91(1989)6. Seiten 309 bis 318 geht ein elektrohydraulisch angetriebenes Verdeck für einen Personenkraftwagen hervor, wobei die Antriebseinrichtung für das Verdeck eine Vielzahl von Antriebselementen (Hydraulikzylinder) und Mikroschaltern umfaßt. So sind neben den einzelnen Verschlüssen dem Verdeckgestell, dem heckseitigen Stoffhaltebügel und dem Verdeckkastendeckel jeweils separate Hydraulikzylinder zugeordnet und die einzelnen Bewegungsabläufe beim Öffnungs- bzw. Schließvorgang des Verdecks werden durch eine Folgesteuerung gesteuert. Beim Öffnungsvorgang des Verdecks wird der Stoffhaltebügel des Verdecks nach oben verschwenkt, danach der Verdeckkastendeckel in seine Offenstellung bewegt, anschließend das Verdeck mit dem Stoffhaltebügel in den Verdeckkasten abgelegt und nachfolgend wird der Verdeckkastendeckel wieder in seine Schließstellung abgesenkt.
Dieser Antriebseinrichtung haftet der Nachteil an, daß sie aufgrund der Vielzahl der Hydraulikzylinder und Mikroschalter einen aufwendigen Aufbau aufweist und deshalb kostenintensiv ist. Da bei der Folgesteuerung die einzelnen Bewegungsabläufe zeitlich aneinandergesetzt sind und ein neuer Bewegungsablauf erst begonnen wird, wenn der vorhergehende Bewegungsablauf abgeschlossen ist, benötigt der Öffnungs- und Schließvorgang des Verdecks relativ viel Zeit.

Aufgabe der Erfindung ist es, eine Antriebseinrichtung für ein halb- oder vollautomatisches Verdeck mit einem Verdeckkastendeckel so weiterzuentwickeln, daß der Aufbau der Antriebseinrichtung vereinfacht wird und daß zudem die Zeit für den Öffnungs- und Schließvorgang verkürzt wird.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß die lediglich Antriebselemente für das Verdeckgestell aufweisende Antriebseinrichtung einen einfachen Aufbau aufweist und über eine mechanische Zwangssteuerung an den Verdeckkastendeckel gekoppelt ist, dergestalt, daß beim Öffnungs- bzw. Schließvorgang eine überlagerte Bewegung von Verdeck und Verdeckkastendeckel stattfindet. Durch diese überlagerte Bewegung wird der Zeitaufwand für den Öffnungs- bzw. Schließvorgang wesentlich reduziert.
Das Antriebselement für das Verdeckgestell umfaßt einen ersten Kurbeltrieb, der mit einer von einem Elektromotor angetriebenen Getriebeeinheit in Wirkverbindung steht. Die mechanische Zwangssteuerung wird durch einen zweiten Kurbeltrieb gebildet, der an den ersten Kurbeltrieb und den Verdeckkastendeckel angeschlossen ist. Die beiden Kurbeltriebe weisen einen einfachen Aufbau auf. Mit der erfindungsgemäßen Antriebseinrichtung wird eine überlagerte Bewegung von Verdeck und Verdeckkastendeckel erzielt, wobei aufgrund der Kinematik der beiden Kurbeltriebe das Verdeck in einer ersten Phase relativ langsam, der Verdeckkastendeckel relativ schnell, in einer zweiten Phase das Verdeck relativ schnell und der Verdeckkastendeckel relativ langsam und einer dritten Phase das Verdeck wieder relativ langsam und der Verdeckkastendeckel relativ schnell bewegt werden. Im Bereich der Strecklage eines Kurbeltriebs bewegt sich das angebundene Teil (Verdeck, Verdeckkastendeckeil) jeweils relativ langsam.
Die beiden Kurbelarme sind vorzugsweise zu einem gemeinsamen Winkelhebel. zusammengefaßt.

Ein Ausführungsbeispiel der Erfindung ist in der Zeichnung näher dargestellt und wird im folgenden näher erläutert:

Es zeigt
- Fig. 1: eine Seitenansicht eines Personenkraftwagens mit einem Verdeck und einem Verdeckkastendeckel, jeweils in Schließstellung, und eine Antriebseinrichtung für das Verdeck und den Verdeckkastendeckel,
- Fig. 2: eine Teilseitenansicht in größerer Darstellung des Verdecks in Schließstellung, die Antriebseinrichtung und den Verdeckkastendeckel in Schließstellung,
- Fig. 3: eine Teilseitenansicht in größerer Darstellung auf das Verdeck und den Verdeckkastendeckel, wobei das Verdeck eine zurückgeklappte Zwischenstellung und der Verdeckkastendeckel eine Offenstellung einnimmt,
- Fig. 4: eine Teilseitenansicht in größerer Darstellung auf das Verdeck in der Ablagestellung und den Verdeckkastendeckel in Schließstellung sowie die Antriebseinrichtung,

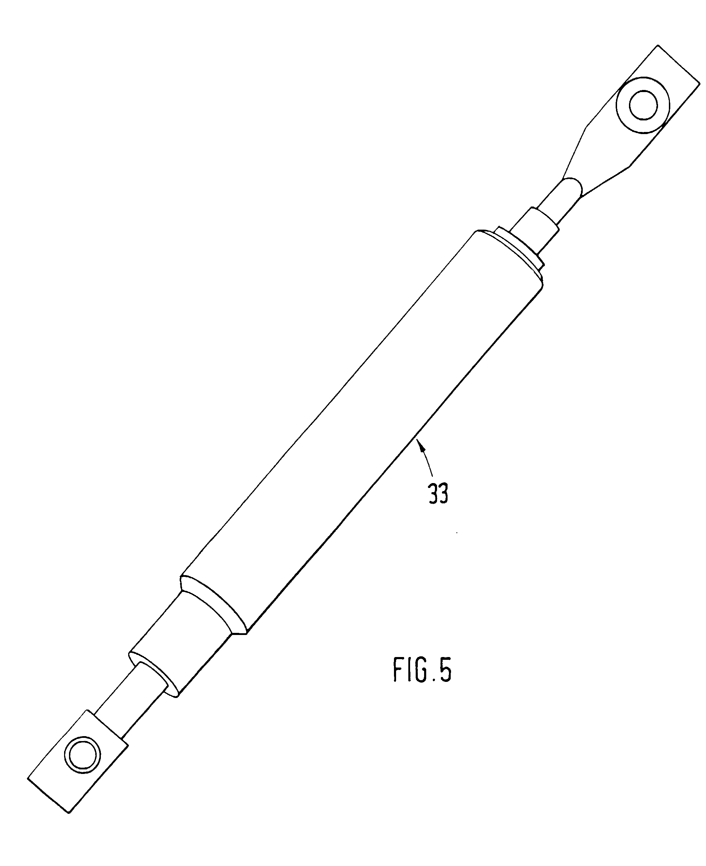

- Fig. 5: eine Einzelheit X der Fig. 1 in vergrößerter Darstellung mit der zweiten Schubstange,

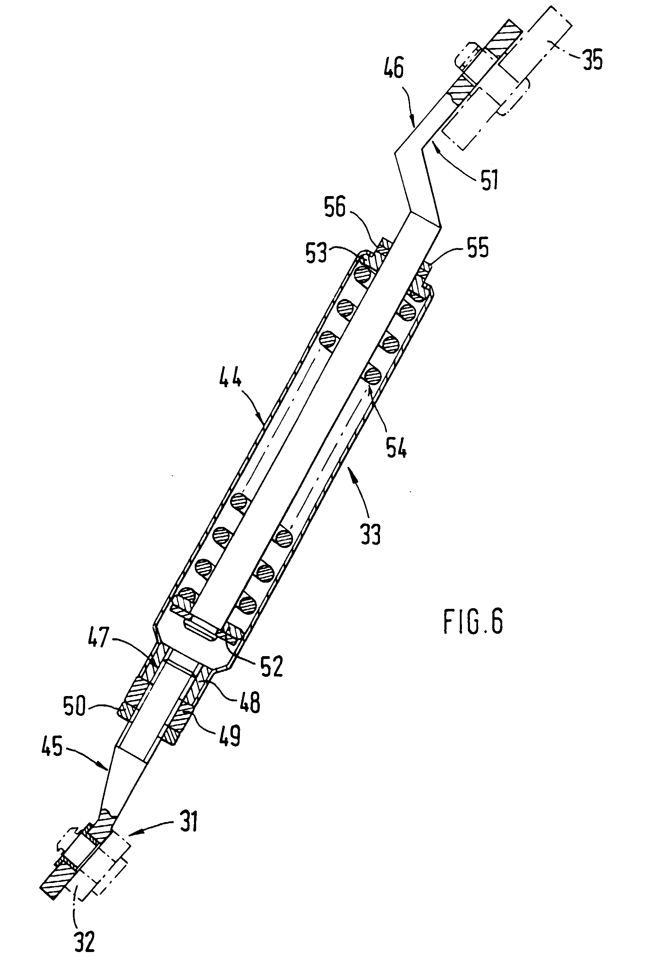

- Fig. 6: einen Schnitt nach der Linie VI-VI der Fig. 5 durch die zweite Schubstange und

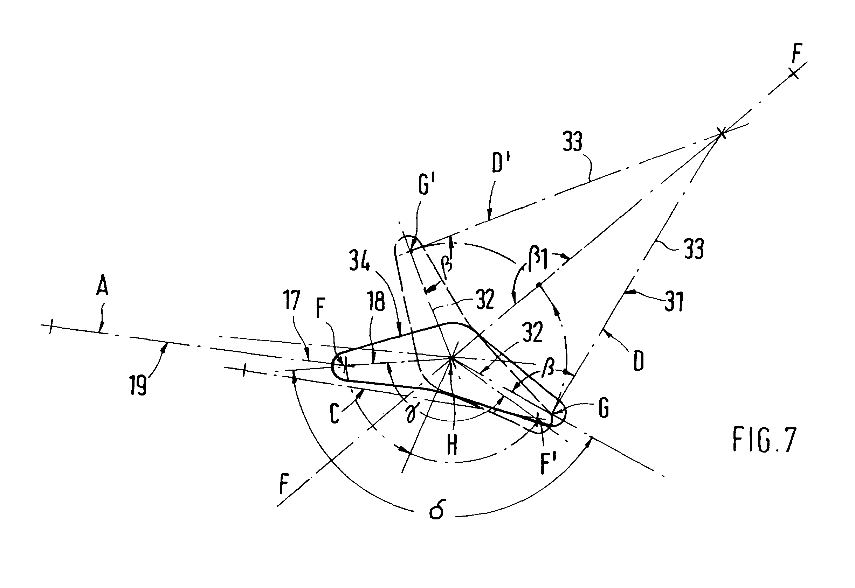

- Fig. 7: ein Funktionsschaubild der beiden Kurbeltriebe während des Öffnungs- bzw. Schließvorganges des Verdecks.

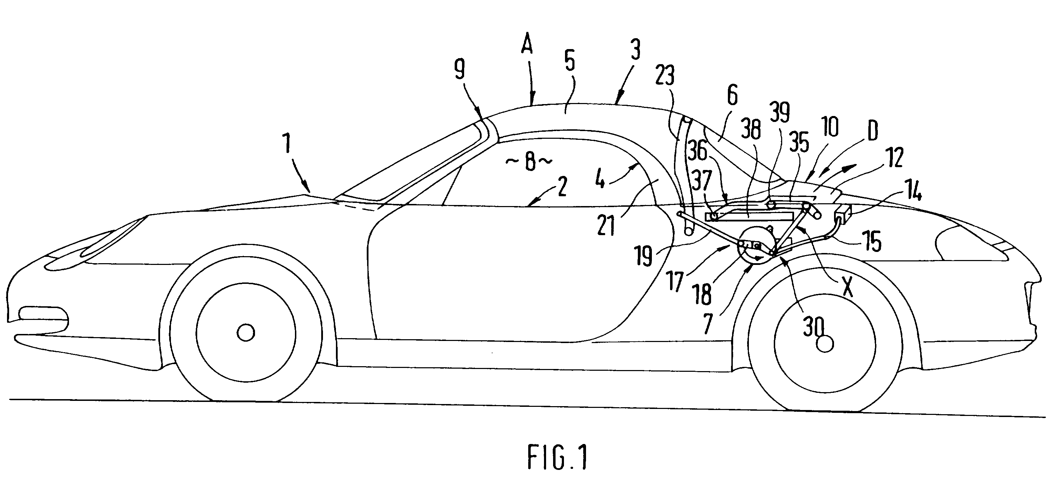

Fig. 1 zeigt einen durch ein Cabriolet gebildeten Personenkraftwagen 1, der oberhalb einer Gürtellinie 2 ein Verdeck 3 aufweist.
Im Ausführungsbeispiel wird das Verdeck 3 durch ein Falt- oder Klappverdeck gebildet. das sich aus einem am Aufbau angelenkten schwenkbaren Verdeckgestell 4 una einem an diesem in Lage gehaltenen Verdeckbezug 5 zusammensetzt. Im hinteren Bereich des Vereckbezuges 5 ist eine Sichtscheibe 6 angeordnet, die durch eine flexible oder starre Heckscheibe gebildet wird.
Das Verdeck 3 ist unter Vermittlung einer Antriebseinrichtung 7 von einer einen Fahrgastraum 8 überspannenden Schließstellung A über Zwischenstellungen (z.B. B) nach hinten in eine heckseitige Ablagestellung C verlagerbar, wobei der Öffnungs- bzw. Schließvorgang automatisch abläuft.
In der Schließstellung A erstreckt sich das Verdeck 3 von einem Windschutzscheibenrahmen 9 bis zu einem Heckbereich 10 und ist über zumindest eine nicht näher dargestellte lösbare Verriegelungsvorrichtung am Windschutzscheibenrahmen 9 in Lage gehalten.
Im Ausführungsbeispiel ist ein manuelles Ver- bzw. Entriegeln des Verdecks 3 am Windschutzscheibenrahmen 9 vorgesehen; dieser Vorgang kann jedoch auch automatisch (d.h. motorisch) erfolgen.
In der Ablagestellung C ist das zusammengeklappte Verdeck 3 in einem heckseitigen Aufnahmeraum aufgenommen, der beispielsweise durch einen Verdeckkasten 11 gebildet wird. Nach oben hin ist der Verdeckkasten 11 zumindest bereichsweise durch einen darüberliegenden Verdeckkastendeckel 12 abgedeckt.
Mittels der Antriebseinrichtung 7 ist das Verdeck 3 zwischen der Schließstellung A und der Ablagestellung C und der Verdeckkastendeckel 12 zwischen einer Schließstellung D und einer Offenstellung E bewegbar.
Die Antriebseinrichtung 7 für das Verdeck 3 umfaßt zumindest ein mit dem Verdeckgestell 4 zusammenwirkendes Antriebselement 13, das mit einem nicht näher dargestellten Steuergerät und einem ebenfalls nicht gezeigten, an der Mittelkonsole im Fahrgastraum 8 angeordneten Bedientaster in Wirkverbindung steht.
Durch Drücken des Bedientasters wird das Verdeck 3 selbsttätig von der Schließstellung A über Zwischenstellungen (z.B. B) in die Ablagestellung C bewegt und umgekehrt.
Im Ausführungsbeispiel ist an jeder Längsseite des Verdeckgestells 4 ein separates Antriebselement 13 vorgesehen.
Das das Verdeckgestell 4 bewegende Antriebselement 13 umfaßt einen elektrischen Antriebsmotor 14, der über biegsame Wellen 15 mit seitlich außenliegenden, aufbauseitig befestigten Getriebeeinheiten 16 verbunden ist. Ferner umfaßt das Antriebselement 13 einen ersten Kurbeltrieb 17, der mit dem Verdeckgestell 4 und der Getriebeeinheit 16 in Wirkverbindung steht.

Der erste Kurbeltrieb 17 setzt sich aus einem ersten Kurbelarm 18 und einer ersten Schubstange 19 zusammen. Die erste Schubstange 19 ist mit dem freien Ende 20 des ersten Kurbelarmes 18 und einem Lenker 21 des Verdeckgestells 4 gelenkig verbunden. Im Ausführungsbeispiel wird der Lenker 21 durch einen B-Säulenlenker gebildet.

Zum Verschwenken eines formsteifen vorderen Verdeckabschnittes 22 sind an beiden Längsseiten des Verdeckgesteils 4 jeweils nicht näher dargestellte Hauptlenker vorgesehen, wobei die mit dem Verdeckabschnitt 22 und dem Aufbau verbundenen Enden des Hauptlenkers und des B-Säulenlenkers Eckpunkte eines Parallelogramms bilden Viergelenkanordnung).

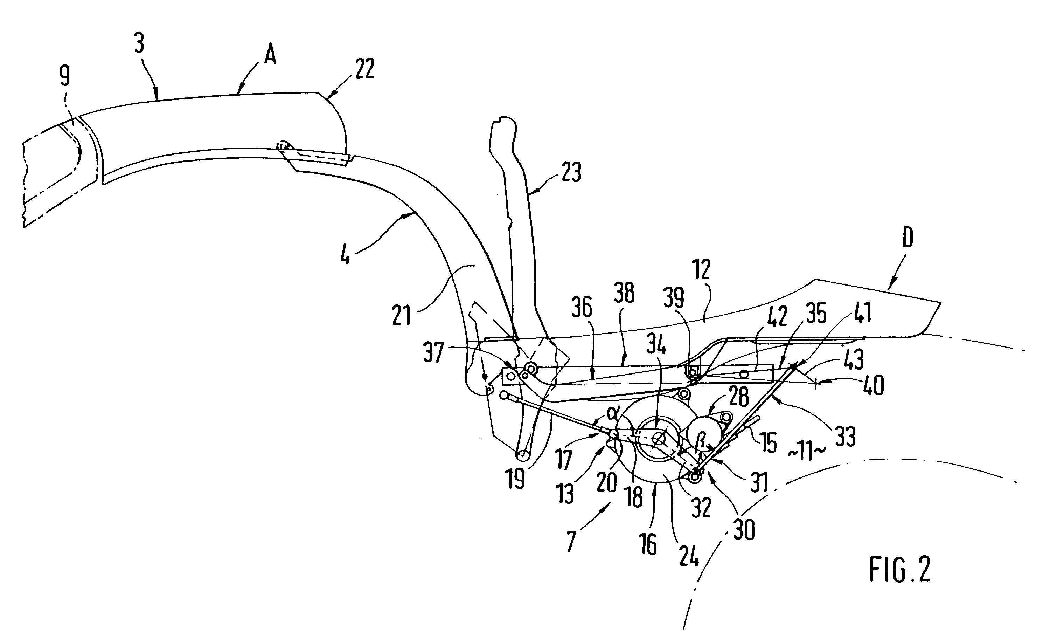

In den Fig. 2 bis 4 ist ferner ein Hauptspriegel 23 des Verdeckgestells 4 gezeigt.

Der erste Kurbelarm 18 ist im Ausführungsbeispiel außerhalb eines Gehäuses 24 der Getriebeeinheit 16 fest mit einem Lagerbolzen verbunden, wobei der Lagerbolzen innerhalb des Gehäuses 24 ein senkrecht angeordnetes Zahnsegment eines Stirnradgetriebes trägt.
Jede Getriebeeinheit 16 umfaßt ein in einem ortsfest gelagerten Gehäuse 24 angeordnetes Stirnradgetriebe und ein mit diesem zusammenwirkendes Planetengetriebe 28. Die Getriebeeinheit 16 ist an einer angrenzenden Seitenwand des Aufbaus mittels Befestigungsschrauben in Lage gehalten. Das Planetengetriebe 28 ist mit einem freien Ende 29 der biegsamen Welle 15 verbunden.
Die Getriebeeinheit kann jedoch auch einen anderen Aufbau aufweisen.

Erfindungsgemäß sind die mit dem Verdeckgestell 4 zusammenwirkenden Antriebselemente 13 jeweils über eine mechanische Zwangssteuerung 30 an den Verdeckkastendeckel 12 gekoppelt, dergestalt, daß beim Öffnungs- bzw. Schließvorgang des Verdecks 3 eine überlagerte Bewegung von Verdeck 3 und Verdeckkastendeckel 12 erfolgt.
Die mechanische Zwangssteuerung 30 wird durch einen zweiten Kurbeltrieb 31 gebildet, der an den ersten Kurbeltrieb 17 und den Verdeckkastendeckel 12 angeschlossen ist. Der zweite Kurbeltrieb 31 setzt sich aus einem zweiten Kurbelarm 32 und einer zweiten Schubstange 33 zusammen.
Die Kurbelarme 18, 32 verlaufen unter einem Winkel δ, der im Ausführungsbeispiel etwa 140° beträgt. Vorzugsweise sind die beiden Kurbelarme 18, 32 zu einem Winkelhebel 34 zusammengefaßt. Der Kurbelarm 32 weist eine geringfügig größere Längserstreckung auf als der andere Kurbelarm 18. Die zweite Schubstange 33 ist mit dem freien Ende des Kurbelarmes 32 und mit einem Lenkhebel 35 des Verdeckkastendeckels 12 gelenkig verbunden.
Der Verdeckkastendeckel 12 weist in seinen beiden Längsseiten jeweils einen langgestreckten Führungsarm 36 auf, der an der Unterseite des Verdeckkastendeckels 12 befestigt ist. (z.B. durch Schrauben).
Ein den Verdeckkastendeckel 12 nach vorne hin überragender Bereich des Führungsarmes 36 ist mit einem Gleitelement 37 versehen, das mit einer aufbauseitig feststehenden, etwa horizontal verlaufenden Führungsschiene 38 zusammenwirkt.
Die seitlich außenliegenden, sich in Längsrichtung des Personenkraftwagens erstreckenden Führungsschienen 38 weisen im Querschnitt gesehen ein etwa C-förmiges Profil auf, wobei das Gleitelement 37 innerhalb der Führungsschiene 38 verschiebbar aufgenommen ist. In der Seitenansicht ist die stehende Führungsschiene 38 so angeordnet, daß ihre offene Seite dem Gleitelement 37 zugekehrt ist. Das Gleitelement 37 wird durch eine Rolle, ein plattenförmiges Element mit eckseitig angeordneten vorstehenden Kalottenabschnitten oder dergleichen gebildet.

Etwa in einem mittleren Bereich der Längserstreckung des Führungsarmes 36 ist ein Ende 39 des Lenkhebels 35 drehbar gelagert.

Das andere Ende 40 des winkelförmig ausgebildeten Lenkhebels 35 ist drehbar am angrenzenden Aufbau gelagert. Dies erfolgt unter Zwischenschaltung eines nicht näher gezeigten Halters.

Etwa im Schnittpunkt 41 der beiden winkelig aneinandergesetzten Abschnitte 42. 43 greift das hintere Ende der zweiten Schubstange 33 an. Die zweite Schubstange 33 ist mehrteilig ausgebildet und umfaßt ein rohrförmiges Gehäuse 44 sowie zwei Schubstangenelemente 45, 46.
Das kürzere ein Toleranzausgleichselement bildende Schubstangenelement 45 ist in eine endseitig am Gehäuse 44 vorgesehene Gewindehülse 47 eingedreht. Die Gewindehülse 47 weist ein durchgehendes Innengewinde auf und setzt sich aus einem zylindrischen, in das zylindrische Gehäuse 44 eingeschobenen Abschnitt 48 und einen das Gehäuse überragenden Bereich 49 zusammen, der an seiner Außenseite als Mutter ausgebildet ist. Dem Bereich 49 ist auf dem Außengewinde des Schubstangenelementes 45 eine Kontermutter 50 vorgelagert.
Das Schubstangenelement 45 ist gelenkig an den Kurbelarm 32 des zweiten Kurbeltriebes 31 angeschlossen.

Durch Verdrehen des Gehäuses 44 relativ zum Schubstangenelement 45 oder umgekehrt lassen sich in einfacher Weise Einbau- und Fertigungstoleranzen von Aufbau und Antriebseinrichtung 7 durch Längenänderung der Schubstange 33 kompensieren. Das Schubstangenelement 46 bildet ein federunterstütztes und längenveränderbares Zug-/Druckelement. Das freie, aus dem Gehäuse 44 vorstehende abgeflachte Ende 51 des Schubstangenelementes 46 ist mit dem Lenkhebel 35 drehbar verbunden. Innerhalb des Gehäuses 44 ist zwischen einer endseitigen Sicherungsscheibe 52 des Schubstangenelementes 46 und einem Gegenlager 53 eine Druckfeder 54 angeordnet, die das bereichsweise zylindrisch ausgebildete Schubstangenelement 46 koaxial umgibt.
Außerhalb des Gehäuses 44 ist am längeren Schubstangenelement 46 ein feststehender Anschlag 55 angebracht, der mit geringem Abstand zum Gegenlager 53 verläuft. Zwischen dem Gegenlager 53 und dem Anschlag 55 ist eine Montagescheibe 56 eingespannt. die nach dem Einbau in den Personenkraftwagen beim Spannen der Druckfeder 54 herausfällt, wenn die richtige Vorspannung eingestellt ist.
Der Verdeckkastendeckel 12 weist örtlich einen nicht näher dargestellten Mikroschalter auf, der dem Steuergerät meldet, daß sich der Verdeckkastendeckel 12 noch ca. 5 mm von seiner Schließstellung D befindet. Der Elektromotor 14 läuft danach noch eine gewisse Nachlaufzeit (einstellbar zwischen 0,1 und 1,0 sec.) weiter und zieht den Verdeckkastendeckel 12 nach unten in seine Schließstellung D, in der er auf nicht näher dargestellten aufbauseitigen Auflageböcken aufliegt. Durch den mehrteiligen Aufbau der Schubstange 33 und die Druckfeder 54 werden diese Bewegungen durch Längenänderung ausgeglichen, ohne daß sich Bauteile der Antriebseinrichtung 7 oder des Aufbaus verformen. Der Verdeckkastendeckel 12 wird durch die Vorspannung der Druckfeder 54 mit einer definierten Kraft nach unten in seine Schließstellung D gezogen, wobei sich hier die Schubstange 33 längt.

Bei geschlossenem Verdeck 3 (Schließstellung A) und geschlossenem Verdeckkastendeckel 12 (Schließdeckel D) befindet sich das mit der Führungsschiene 38 zusammenwirkende Gleitelement 37 benachbart dem vorderen Ende der Führungsschiene 38 (Fig. 2). Der Lenkhebel 35 des Verdeckkastendeckels 12 ist annähernd horizontal ausgerichtet. Die Schubstange 19 und der Kurbelarm 18 des ersten Kurbeltriebs nehmen beinahe eine Strecklage ein, d.h. Schubstange 19 und Kurbelarm 18 schließen zwischen sich einen Winkel α ein. der etwas kleiner ist als 180°.
Der zweite Kurbelarm 32 und die zweite Schubstange 33 verlaufen in dieser Stellung unter einen Winkel β von etwa 90° bis 100°.

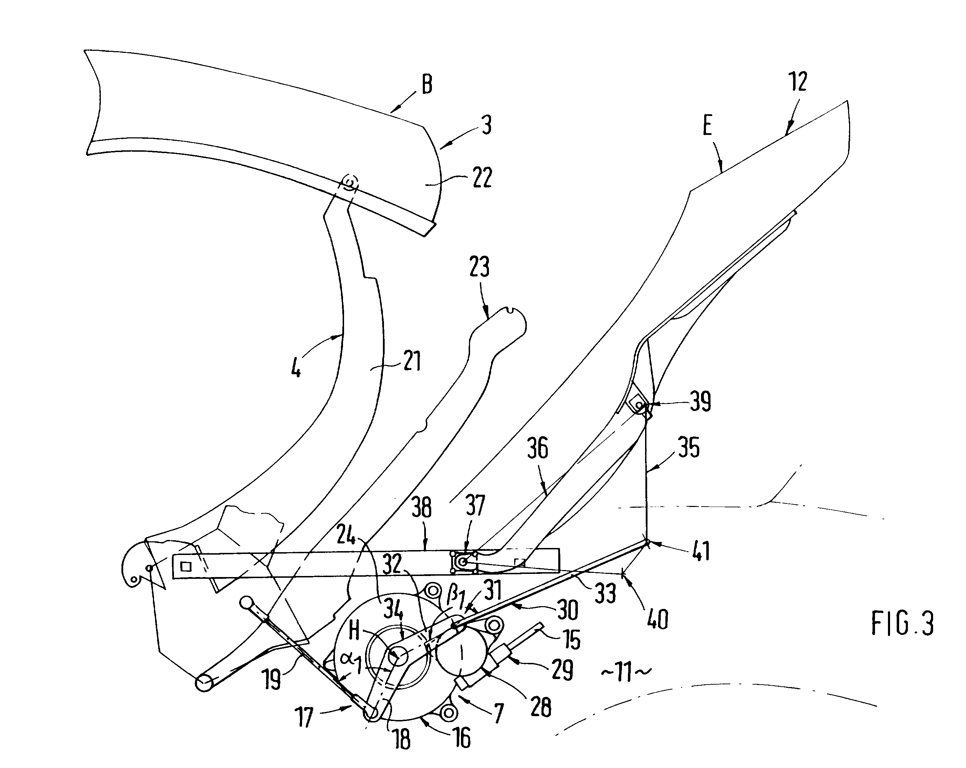

Nach dem Lösen des Verdecks 3 vom Windschutzscheibenrahmen 9 wird durch Drücken des Bedientasters der Elektromotor 14 angesteuert und über die Antriebseinrichtung 7 wird in einer ersten Bewegungsphase einerseits das Verdeck 3 vom Windschutzscheibenrahmen 9 nach hinten in eine Zwischenstellung B und gleichzeitig der Verdeckkastendeckel 12 von der Schließstellung D in die Offenstellung E bewegt (Fig. 3). Die beiden starr zueinander angeordneten Kurbelarme 18. 32 werden dabei entgegen dem Uhrzeigersinn um den Drehpunkt H verschwenkt.

Fig. 3 zeigt die Zwischenstellung B des Verdecks 3, in der der Verdeckkastendeckel 12 seine Offenstellung E einnimmt.
Da der erste Kurbeltrieb 17 anfangs beinahe eine Strecklage einnimmt, wird das Verdeck 3 in dieses Phase relativ langsam nach hinten, der Verdeckkastendeckel 12 hingegen wegen der Ausbildung der Kinematik des zweiten Kurbeltriebes 31 relativ schnell von der Schließstellung D in die Offenstellung E bewegt.

Beim Verschwenken des Verdecks 3 in die Zwischenstellung B verkleinert sich der Winkel α zwischen der Schubstange 19 und dem Kurbelarm 18 ständig und nimmt in dieser Zwischenstellung B einen Winkel α1 von etwas weniger als 90° ein.
Der Winkel β zwischen der zweiten Schubstange 33 und dem Kurbelarm 32 vergrößert sich während der Öffnungsbewegung des Verdeckkastendeckels 12, wobei der Winkel β1 in der Offenstellung des Verdeckkastendeckels 12 etwa 180° beträgt, d.h. der zweite Kurbeltrieb 31 befindet sich in Strecklage. Deshalb verändert sich der Verdeckkastendeckel 12 während der nachfolgenden weiteren Drehbewegung der beiden Kurbelarme 18, 32 nur geringfügig in seiner Lage. Das Verdeck 3 hingegen bewegt sich nun relativ schnell nach unten, taucht unter den Verdeckkastendeckel 12 ein und bewegt sich in Richtung Verdeckkasten 11. Beim Öffnungsvorgang des Verdeckkastendeckels 12 wird der Lenkhebel 35 um den festen Drehpunkt 40 entgegen dem Uhrzeigersinn hochgeschwenkt und der Führungsarm 36 mit dem Gleitelement 37 wandert in der Führungsschiene 38 nach hinten. Dadurch stellt sich der Verdeckkastendeckel 12 in seine schrägverlaufende Offenstellung E (Fig. 3).

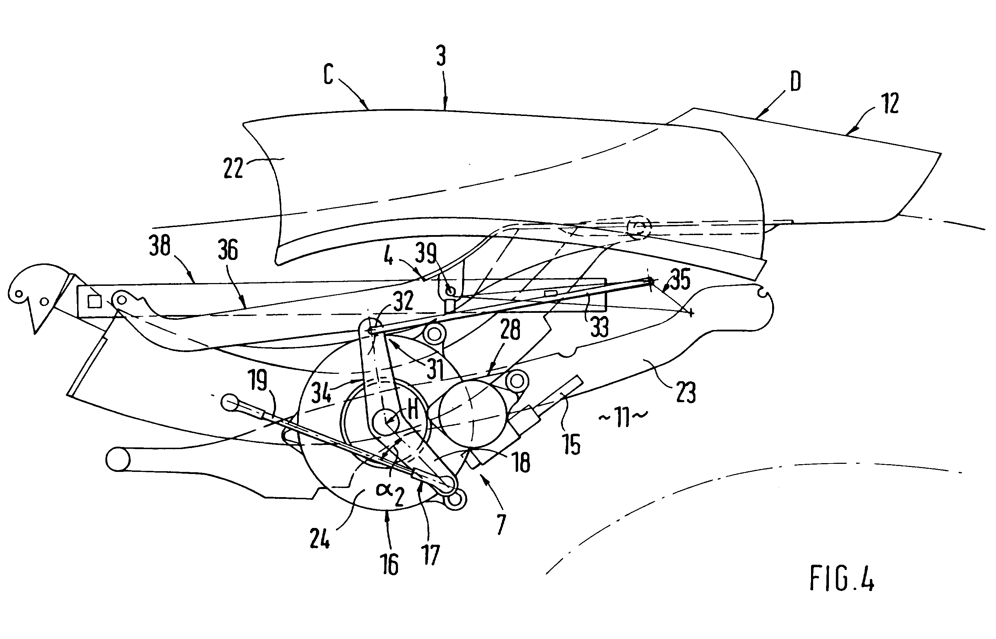

Durch weiteres Verdrehen der beiden Kurbelarme 18, 32 entgegen dem Uhrzeigersinn wird das Verdeck 3 in die Ablagestellung C und der Verdeckkastendeckel 12 wieder in seine Schließstellung D verlagert (Fig. 4).
In der Ablagestellung C des Verdecks 3 nimmt die erste Schubstange 19 einen spitzen Winkel α2 zum ersten Kurbelarm 18 ein. Während der Bewegung des Verdecks 3 von der Zwischenstellung B in die Ablagestellung C nimmt der Winkel von α1 nach α2 ab.
Der Winkel β zwischen dem zweiten Kurbelarm 32 und der Schubstange 33 ist in der Ablagestellung C des Verdecks 3 genau so groß wie in der Schließstellung A des Verdecks 3.
Der Schnittpunkt F zwischen erster Schubstange 19 und ersten Kurbelarm 18 wandert während der Öffnungsbewegung des Verdecks 3 auf einer Kreisbahn entgegen dem Uhrzeigersinn und nimmt in der Ablagestellung C die Position F' ein. Der Schnittpunkt G der zweiten Schubstange 33 mit dem Kurbelarm 32 bewegt sich ebenfalls während des Öffnungsvorganges des Verdecks 3 auf einer Kreisbahn und wandert in die Position G'. Die räumlichen Lagen der zweiten Schubstange 33 und des Kurbelarmes 32 sind in beiden Schließstellungen des Verdeckkastendeckels 12 unterschiedlich und zwar verlaufen sie symmetrisch zu einer Hilfsebene F-F, wobei die Hilfsebene F-F der Strecklage des Kurbeltriebes 31 in der Offenstellung E des Verdeckkastendeckels 12 entspricht.

Der erste Kurbelarm 18 wird beim Öffnungsvorgang des Verdecks 3 entgegen dem Unhrzeigersinn um einen Winkel γ um den Drehpunkt H verschwenkt. Dadurch wird das Verdeck 3 von der Schließstellung A in die Ablagestellung B verlagert. Der zweite Kurbelarm 32 wird beim Öffnungsvorgang des Verdecks 3 ebenfalls um den Winkel γ entgegen dem Uhrzeigersinn um den Drehpunkt H bewegt. Während der Bewegung des Verdecks 3 von der Schließstellung A in die Ablagestellung C führt der Verdeckkastendeckel 12 jedoch eine erste Öffnungsbewegung und eine nachfolgende zweite Schließbewegung durch.

## Patentansprüche

1. Verdeck für ein Fahrzeug, insbesondere Personenkraftwagen, das mittels einer Antriebseinrichtung selbsttätig von einer einen Fahrgastraum überspannenden Schließstellung in eine heckseitige Ablagestellung verlagerbar ist, in der es in einem mit einem Verdeckkastendeckel versehenen Verdeckkasten aufgenommen ist und die Antriebseinrichtung zumindest ein mit dem Verdeckgestell des Verdecks zusammenwirkendes Antriebselement umfaßt, dadurch gekennzeichnet, daß das am Verdeckgestell (4) angreifende Antriebselement (13) einen ersten Kurbeltrieb (17) umfaßt, der mit einer von einem Elektromotor (14) angetriebenen, aufbauseitig feststehenden Getriebeeinheit (16) in Wirkverbindung steht und daß das das Verdeckgestell (4) antreibende Antriebselement (13) über eine mechanische Zwangssteuerung (30) mit dem Verdeckkastendeckel (12) gekoppelt ist, wobei durch die mechanische Zwangssteuerung (30) beim Öffnungs- und Schließvorgang des Verdecks (3) eine überlagerte Bewegung von Verdeck (3) und Verdeckkastendeckel (12) erfolgt.

2. Verdeck nach Anspruch 1, dadurch gekennzeichnet, daß die mechanische Zwangssteuerung (30) durch einen zweiten Kurbeltrieb (31) gebildet wird, der an den ersten Kurbeltrieb (17) und den Verdeckkastendeckel (12) angeschlossen ist.

3. Verdeck nach Anspruch 1, dadurch gekennzeichnet, daß der erste Kurbeltrieb (17) einen drehbaren, mit der Getriebeeinheit (16) starr verbundenen ersten Kurbelarm (18) und eine erste Schubstange (19) umfaßt, wobei die Schubstange (19) mit dem freien Ende (20) des ersten Kurbelarmes (18) und einen Lenker (21) des Verdeckgestells (4) gelenkig verbunden ist.

4. Verdeck nach einem der vorangegangenen Ansprüchen, dadurch gekennzeichnet, daß der zweite Kurbeltrieb (31) einen zweiten Kurbelarm (32) und eine zweite Schubstange (33) umfaßt, wobei der zweite Kurbelarm (32) mit der Getriebeeinheit (16) in Wirkverbindung steht und daß die zweite Schubstange (33) einerseits mit einem freien Ende des zweiten Kurbelarmes (32) und andererseits mit einem Lenkhebel (35) des Verdeckkastendeckels (12) gelenkig verbunden ist.

5. Verdeck nach Anspruch 4, dadurch gekennzeichnet, daß die beiden Kurbelarme (18, 32) zu einem gemeinsamen starren Winkelhebel (34) zusammengefaßt sind, wobei die Kurbelarme (18, 32) unter einem Winkel δ zueinander verlaufen.

6. Verdeck nach einem der vorangegangenen Ansprüche, dadurch gekennzeichnet, daß bei einer Drehbewegung des ersten Kurbelarmes (18) um einen Winkel γ entgegen dem Uhrzeigersinn das Verdeck 3 von einer Schließstellung A über Zwischenstellungen B in eine heckseitige Ablagestellung C verlagert wird und daß bei einer synchronen Drehbewegung des zweiten Kurbelarmes (32) der Verdeckkastendeckel (12) eine erste Öffnungsbewegung und eine nachfolgende Schließbewegung durchführt.

7. Verdeck nach einem der vorangegangenen Ansprüche, dadurch gekennzeichnet, daß in der Schließstellung C des Verdecks (3) die erste Schubstange (19) und der erste Kurbelarm (18) annähernd eine Strecklage einnehmen und daß sich der Winkel α zwischen der ersten Schubstange (19) und dem ersten Kurbelarm (18) beim Öffnungsvorgang des Verdecks (3) kontinuierlich verkleinert und in der Ablagestellung C zu einem spitzen Winkel α2 wird.

8. Verdeck nach einem der vorangegangenen Ansprüche, dadurch gekennzeichnet, daß der Winkel β zwischen dem zweiten Kurbelarm (32) und der zweiten Schubstange (33) während der Öffnungsbewegung des Verdeckkastendeckels (12) kontinuierlich bis zum Winkel β1 = 180° (Strecklage) in der Offenstellung E des Verdeckkastendeckels (12) ansteigt und bei der nachfolgenden Schließbewegung des Verdeckkastendeckels (12) wieder bis zum Winkel β abfällt.

9. Verdeck nach einem der vorangegangenen Ansprüche, dadurch gekennzeichnet, daß der zweite Kurbelarm (32) und die zweite Schubstange (33) bei geschlossenem Verdeckkastendeckel (12) in der Schließstellung A und der Ablagestellung C des Verdecks (3) unterschiedliche räumliche Lagen einnehmen, wobei die beiden Lagen symmetrisch zu der Stellung verlaufen, die der zweite Kurbelarm (32) und die zweite Schubstange (33) in der Offenstellung E des Verdeckkastendeckels (12) einnehmen (Strecklage).

## Claims

1. A folding top for a vehicle, in particular a passenger car, which is automatically displaceable by means of a drive device from a closed position spanning a passenger compartment into a rear folded-down position in which it is received in a folding-top box provided with a lid, and the drive device comprises at least one drive member cooperating with the frame of the folding top, **characterized in that** the drive member (13) engaging with the folding-top frame (4) comprises a first crank device (17) which is operatively connected to a drive unit (16) driven by an electric motor (14) and fixed on the body, and the drive member (13) driving the folding-top frame (4) is coupled by way of a positive mechanical control (30) to the lid (12) of the folding-top box, wherein a superimposed movement of the folding top (3) and the lid (12) of the folding-top box takes place as a result of the positive mechanical control (30) during the opening and closing of the folding top (3).

2. A folding top according to Claim 1, **characterized in that** the positive mechanical control (30) is formed by a second crank device (31) attached to the first crank device (17) and the lid (12) of the folding-top box.

3. A folding top according to Claim 1, **characterized in that** the first crank device (17) comprises a rotatable first crank arm (18), rigidly connected to the drive unit (16), and a first connecting rod (19), wherein the connecting rod (19) is connected in an articulated manner to the free end (20) of the first crank arm (18) and a control arm (21) of the folding-top frame (4).

4. A folding top according to one of the preceding Claims, **characterized in that** the second crank device (31) comprises a second crank arm (32) and a second connecting rod (33), wherein the second crank arm (32) is operatively connected to the drive unit (16), and the second connecting rod (33) is connected in an articulated manner to a free end of the second crank arm (32) at one end and to a control lever (35) of the lid (12) of the folding-top box at the other end.

5. A folding top according to Claim 4, **characterized in that** the two crank arms (18, 32) are joined to form a common rigid angled lever (34), wherein the crank arms (18, 32) extend at an angle δ to each other.

6. A folding top according to one of the preceding Claims, **characterized in that** during a rotational movement of the first crank arm (18) anti-clockwise about an angle γ the folding top 3 is moved from a closed position **A** by way of intermediate settings **B** into a folded-down position **C** at the rear, and during a synchronous rotational movement of the second crank arm (32) the lid (12) of the folding-top box performs a first opening movement and a subsequent closing movement.

7. A folding top according to one of the preceding Claims, **characterized in that** in the closed position **A** of the folding roof (3) the first connecting rod (19) and the first crank arm (18) occupy substantially a stretched position, and the angle α between the first connecting rod (19) and the first crank arm (18) continuously decreases during the opening of the folding top (3), and becomes an acute angle α2 in the folded-down position C.

8. A folding top according to one of the preceding Claims, **characterized in that** the angle β between the second crank arm (32) and the second connecting rod (33) increases continuously during the opening movement of the lid (12) of the folding-top box to reach the angle β**1** = **180°** (stretched position) in the open position **E** of the lid (12) of the folding-top box and during the subsequent closing movement of the lid (12) of the folding-top box it decreases again to the angle β.

9. A folding top according to one of the preceding Claims, **characterized in that** the second crank arm (32) and the second connecting rod (33) occupy different spatial positions when the lid (12) of the folding-top box is closed in the closed position **A** and in the folded-down position **C** of the folding top (3), wherein the two positions extend symmetrically with respect to the position which the second crank arm (32) and the second connecting rod (33) occupy (stretched position) in the open position **E** of the lid (12) of the folding-top box.

## Revendications

1. Capote pour un véhicule, notamment une voiture de tourisme, qui peut être déplacée automatiquement, au moyen d'un dispositif d'entraînement, d'une position de fermeture qui recouvre un habitacle, à une position de rangement à l'arrière, dans laquelle elle est logée dans un coffre de capote pourvu d'un couvercle et le dispositif d'entraînement comprend au moins un élément d'entraînement qui coopère avec le bâti de la capote, caractérisée en ce que l'élément d'entraînement (13) qui agit sur le bâti (4) de la capote comprend un premier mécanisme à manivelle (17) qui est en liaison active avec une unité de transmission (16) fixe côté carrosserie, entraînée par un moteur électrique (14), et en ce que l'élément d'entraînement (13) qui entraîne le bâti (4) de la capote est accouplé au couvercle (12) du coffre de capote par une commande forcée mécanique (30), la commande forcée mécanique (30) provoquant un mouvement superposé de la capote (3) et du couvercle (12) lors de l'ouverture et de la fermeture de la capote (3).

2. Capote selon la revendication 1, caractérisée en ce que la commande forcée mécanique (30) est constituée par un deuxième mécanisme à manivelle (31) qui est raccordé au premier mécanisme à manivelle (17) et au couvercle (12) du coffre de capote.

3. Capote selon la revendication 1, caractérisée en ce que le premier mécanisme à manivelle (17) comprend un premier bras de manivelle (18) tournant et relié rigidement à l'unité de transmission (16) et une première bielle (19), la bielle (19) étant reliée de manière articulée à l'extrémité libre (20) du premier bras de manivelle (18) et à un bras oscillant (21) du bâti (4) de la capote.

4. Capote selon l'une des revendications précédentes, caractérisée en ce que le deuxième mécanisme à manivelle (31) comprend un deuxième bras de manivelle (32) et une deuxième bielle (33), le deuxième bras de manivelle (32) étant en liaison active avec l'unité de transmission (16), et en ce que la deuxième bielle (33) est reliée de manière articulée d'une part à une extrémité libre du deuxième bras de manivelle (32) et d'autre part, à un levier de commande (35) du couvercle (12) du coffre de capote.

5. Capote selon la revendication 4, caractérisée en ce que les deux bras de manivelle (18, 32) forment entre eux un angle .

6. Capote selon l'une des revendications précédentes, caractérisée en ce que lors d'un mouvement de rotation du premier bras de manivelle (18) d'un angle , dans un sens contraire aux aiguilles d'un montre, la capote (3) est déplacée d'une position de fermeture (A) à une position de rangement arrière (C), en passant par des positions intermédiaires (B) et en ce que dans le cas d'un mouvement de rotation synchrone du deuxième bras de manivelle (32), le couvercle (12) du coffre de capote exécute un premier mouvement d'ouverture et un mouvement de fermeture suivant.

7. Capote selon l'une des revendications précédentes, caractérisée en ce qu'en position de fermeture (C) de la capote (3), la première bielle (19) et le premier bras de manivelle (18) prennent approximativement une position tendue et en ce que l'angle entre la première bielle (19) et le premier bras de manivelle (18) diminue en continu lors de l'ouverture de la capote (3) et devient un angle aigu α2 dans la position de rangement C.

8. Capote selon l'une des revendications précédentes, caractérisée en ce que l'angle β entre le deuxième bras de manivelle (32) et la deuxième bielle (33) augmente en continu pendant le mouvement d'ouverte du couvercle du coffre de capote, jusqu'à l'angle β 1 = 180° (position tendue) dans la position d'ouverture E du couvercle (12), et diminue à nouveau jusqu'à l'angle β lors du mouvement de fermeture suivant du couvercle (12) du coffre de capote.

9. Capote selon l'une des revendications précédentes, caractérisée en ce que le deuxième bras de manivelle (32) et la deuxième bielle (33) prennent des positions spatiales différentes lorsque le couvercle (12) du coffre de capote est fermé en position de fermeture (A) et dans la position de rangement (C) de la capote (3), les deux positions étant symétriques par rapport à la position que prennent le deuxième bras de manivelle (32) et la deuxième bielle (33) dans la position d'ouverture (E) du couvercle (12) du coffre de capote (position tendue).
